# EUROPÄISCHE PATENTSCHRIFT

(11) **EP 3 010 624 B1**
(45) Veröffentlichungstag und Bekanntmachung des Hinweises auf die Patenterteilung: **13.02.2019**
(21) Anmeldenummer: 14749699.6
(22) Anmeldetag: 13.06.2014
(51) Int. Cl.: B01D 53/52, B01D 53/73, B01D 53/78, C01B 17/05

(54) **VERFAHREN UND VORRICHTUNG ZUR ENTSCHWEFELUNG VON GASGEMISCHEN**
PROCESS AND APPARATUS FOR DESULFURIZING GAS MIXTURES
PROCÉDÉ ET DISPOSITIF DE DÉSULFURATION DE MÉLANGES GAZEUX

(30) Priorität: 20.06.2013 AT 5052013
(43) Veröffentlichungstag der Anmeldung: 27.04.2016
(73) Patentinhaber: Technische Universität Wien, 1040 Wien (AT)
(72) Erfinder: HARASEK, Michael, A-1160 Wien (AT); MAKARUK, Aleksander, A-1050 Wien (AT)
(74) Vertreter: Ellmeyer, Wolfgang
(86) Internationale Anmeldenummer: PCT/AT2014/050132
(87) Internationale Veröffentlichungsnummer: WO 2014/201487

(56) Entgegenhaltungen:
- WO-A1-98/16492
- GB-A- 2 125 779
- US-A- 4 460 554
- US-A- 4 499 059
- US-A- 4 816 238

## Beschreibung

Die vorliegende Erfindung betrifft ein Verfahren und eine Vorrichtung zur Entschwefelung von Gasgemischen, genauer gesagt von Gemischen, die eine brennbare Gaskomponente enthalten, wie z.B. Methan, Wasserstoff, Kohlenmonoxid oder Kohlenwasserstoffe.

Solche brennbaren Komponenten sind - abgesehen von gasförmigen fossilen Brennstoffen wie Erdgas oder Schiefergas - beispielsweise in Gasgemischen, die aus der anaeroben Vergärung (Biogas) oder der thermischen Vergasung von Biomasse resultieren. Da Letzteren zunehmende Bedeutung zukommt, wird in der Folge für brennbare Komponenten enthaltende, zu entschwefelnde Gasgemische allgemein der Ausdruck "Biogas" gebraucht.

In derartigen Gasgemischen ist häufig H₂S als korrosive, umweltschädliche und toxische Komponente enthalten, die vor einer weiteren Behandlung oder Nutzung des Gases, wie z.B. katalytischer Synthese, Netzeinspeisung oder Stromproduktion, daraus entfernt werden muss. Zur Gasentschwefelung sind zahlreiche verschiedene Prozesse bekannt, die nach dem jeweils eingewandten Trennprinzip unterschieden werden können: Adsorption (z.B. an Aktivkohle bzw. Metalloxide), Absorption (z.B. in alkalische Lösungen), katalytische Umsetzung (z.B. im Claus-Prozess), mikrobiologische/bakterielle Abbauprozesse sowie Membrantrennungen.

Die vorliegende Erfindung betrifft Entschwefelungsverfahren, die auf einer Kombination aus Absorption und Oxidation (zu elementarem Schwefel oder höheren Oxidationsstufen desselben) basieren.

Bei der Entschwefelung von Gasgemischen, die CO₂ enthalten, wird in der Regel danach getrachtet, H₂S möglichst selektiv im Verhältnis zu CO₂ zu entfernen, da die parasitische CO₂-Entfernung einen erhöhten Bedarf an Betriebsmitteln und Anlagenkapazitäten verursacht. Bei absorptiver Entfernung, wobei zumeist eine Absorption von H₂S in wässrige alkalische Lösungen (z.B. NaOH, KOH) unter Bildung von Sulfiden oder Hydrogensulfiden (z.B. Na₂S, NaHS) zum Einsatz kommt, kann zwar das bei Co-Absorption von CO₂ gebildete Carbonat (z.B. Na₂CO₃) in der Folge mit H₂S ebenfalls zum gewünschten Sulfid umgesetzt werden, dennoch sind vorderhand größere Mengen an Absorptionsmittel (Lauge) erforderlich, um dieselbe Menge an H₂S zu binden.

Als Lösung des Problems wurden die Kontaktzeiten zwischen dem zu entschwefelnden Gasgemisch und dem Absorptionsmittel sehr kurz, z.B. im Hundertstelsekunden-Bereich, gehalten, da dann H₂S bevorzugt absorbiert wird; siehe z.B. CA 547.215 A. Diese bevorzugte Absorption kann durch Zusatz von Metallchelaten zum Absorptionsmittel, wie z.B. in der CA 1.304.913 C offenbart wird, und/oder Anlegen hoher Drücke, wie in EP 370.145 A1 beschrieben, unterstützt werden.

Alternativ dazu können nacheinander mehrere Absorptionsmittel mit unterschiedlichem pH (siehe z.B. US 4.585.630) oder auch ein und dasselbe Absorptionsmittel für mehrere Gasströme eingesetzt werden (US 4.395.385). Dazwischen kann eine Abtrennung des entschwefelten Gasstroms vom mit H₂S angereicherten Absorptionsmittel (Phasentrennung) erfolgen.

Das Absorptionsmittel wird in allen Fällen vorzugsweise regeneriert und zur Absorptionsstufe rezykliert. Die Regeneration kann beispielsweise erfolgen, indem die absorbierten Gase (H₂S, CO₂) mittels Einleitung von Wasserdampf ("steam stripping") und/oder Temperaturerhöhung desorbiert und ausgetrieben werden (siehe z.B. US 2.886.405 und EP 004.043 A1) und/oder indem die Absorption bei einem erhöhten Druck durchgeführt wird, der bei der anschließenden Regeneration des Absorptionsmittels aufgehoben wird, wodurch ein (zusätzlicher) Teil des absorbierten Gases entweicht, siehe z.B. EP 046.061 A1. In letzterem Dokument wird auch die Nutzbarkeit des so erhaltenen, H₂S enthaltenden Gasstroms im Claus-Prozess, d.h. Oxidation zu elementarem Schwefel, erwähnt.

In US 6.365.099 B1 wird ein Verfahren offenbart, bei dem Absorption und Oxidation von H₂S in Gasgemischen gleichzeitig durchgeführt werden, indem ein Gemisch aus Absorptionsmittel (wässrige Base) und Oxidationsmittel (Wasserstoffperoxid, H₂O₂) in das Gas eingespritzt wird. In DE 101 19 991 A1 wird hingegen H₂O₂ als Oxidationsmittel dem mit H₂S angereicherten Absorptionsmittel bzw. gleichzeitig damit dem durch eine Kolonne geführten Gas zugesetzt, um Sulfid zu Sulfat zu oxidieren. Letzteres kann in der Folge genutzt werden kann, um Ammoniak aus dem zu reinigenden Gasgemisch absorptivzu entfernen. Gemäß WO 2008/000388 A1 wird das H₂O₂ direkt der Absorptionsstufe, d.h. in das Absorptionsmittel in der Absorptionskolonne, zugesetzt, um so wiederum Sulfat und in der Folge Ammoniumsulfat zu erzeugen, das beispielsweise als Dünger Anwendung findet.

In US 4.499.059 A wird ein Verfahren zur Entschwefelung von Gasen offenbart, bei dem eine wässrige alkalische Lösung als Absorptionsmittel direkt in einen zu entschwefelnden Gasstrom injiziert wird, wobei als Absorptionsmittel entweder eine Lösung eines Metallionen, vorzugsweise Eisen(III)-Ionen, enthaltenden Chelatkomplexes, oder 5%ige wässrige NaOH injiziert wird. In ersterem Fall kommt es zu einer gleichzeitigen Oxidation des gebundenen H₂S zu elementarem Schwefel, was mit einer Reduktion des Metallions, vorzugsweise von Fe(III) zu Fe(II), einhergeht. Die Chelatlösung wird in der Folge vorzugsweise durch Reoxidation des Metallions regeneriert. Bei Verwendung von wässriger NaOH wird hingegen die sulfidhältige Lösung direkt als Sonderabfall entsorgt. In beiden Fällen werden die flüssige und die Gasphase nach einer äußerst kurzen Kontaktzeit wieder voneinander getrennt, um die gleichzeitige Absorption von CO₂ - neben H₂S - zu unterdrücken. Dies erfolgt mittels eines beliebigen bekannten Separators, aus dem die flüssige Phase über eine mit einem Ventil versehen Leitung ("valved line") abgelassen und verworfen wird. Aufgrund der Gleichstromführung des zu entschwefelnden Gases und des injizierten Absorptionsmittels erfolgt die Phasentrennung im Separator von selbst, sobald das zweiphasige Gemisch nicht länger unter Druck steht.

Gemäß WO 2009/067333 A1 wird schließlich das zu entschwefelnde Gasgemisch in der Kolonne nur mit einer Lösung des Oxidationsmittels in Kontakt gebracht, die vorzugsweise auf einen pH zwischen 3 und 8 eingestellt wird. Als Oxidationsmittel wird aus Kostengründen vorzugsweise wiederum H₂O₂ eingesetzt, um H₂S zu elementarem Schwefel zu oxidieren, der von der Lösung abgetrennt wird.

Die Erfinder haben im Zuge ihrer Forschungen nun festgestellt, dass die in den letzteren Dokumenten beschriebenen Verfahren mitunter ein hohes Gefahrenpotenzial in sich bergen, da H₂O₂ in wässriger Lösung bekanntlich dazu neigt, sich in H₂O und O₂ zu zersetzen. Diese Zersetzung wird durch Metalloberflächen oder -ionen sowie andere Ionen, wie z.B. OH⁻, katalysiert, somit auch in alkalischer Lösung. Da der dabei entstehende Sauerstoff ebenfalls zu der üblicherweise beabsichtigten Oxidation des H₂S zu elementarem Schwefel oder Sulfat beitragen kann, ist eine solche Zersetzung gemäß dem Stand der Technik oftmals gar nicht störend, sondern mitunter sogar erwünscht.

Bei der Entschwefelung von "Biogas", also von Gasgemischen, die brennbare Komponenten enthalten, können jedoch hochexplosive Gasmischungen entstehen, wenn der Sauerstoff aus der flüssigen in die Gasphase desorbiert, so dass einige der oben beschriebenen Verfahren für die Biogasbehandlung gar nicht oder nur mit aufwändigen Sicherheitsvorkehrungen anwendbar sind.

Ziel der Erfindung war daher die Entwicklung eines verbesserten Verfahrens zur absorptiven Entschwefelung von Biogas und anderen, brennbare Komponenten enthaltenden Gasgemischen, sowie einer entsprechenden Vorrichtung zu dessen Durchführung.

### OFFENBARUNG DER ERFINDUNG

Dieses Ziel erreicht die vorliegende Erfindung in einem ersten Aspekt durch Bereitstellung eines Verfahrens zur Entschwefelung eines H₂S und CO₂ enthaltenden Gasgemischs mittels selektiver Absorption des H₂S in ein basisches Absorptionsmittel und anschließender Oxidation des absorbierten H₂S mit einem Oxidationsmittel, wobei:
i) als zu entschwefelndes Gasgemisch ein H₂ und/oder CH₄ enthaltendes, brennbares Biogas eingesetzt wird;
ii) nach dem in zumindest einem Absorptionsreaktor durchgeführten Absorptionsschritt ein Phasentrennschritt zur Abtrennung der flüssigen Phase in Form des mit Sulfid angereicherten Absorptionsmittels von der die brennbaren Gaskomponenten enthaltenden Gasphase in zumindest einem Separator durchgeführt wird; und
iii) die so entgaste flüssige Phase aus dem zumindest einen Separator über eine Leitung, die zur Verhinderung einer Rückvermischung der beiden Phasen ein/e/n oder mehrere Siphone, Rückschlagventile oder -klappen oder schwimmergesteuerte oder elektronisch niveaugesteuerte Ableiter umfasst, in zumindest einen Oxidationsreaktor übergeführt wird, wo sie mit einem Oxidationsmittel in Kontakt gebracht wird, um das Sulfid zu elementarem Schwefel und/oder höheren Oxidationsstufen des Schwefels zu oxidieren.

Auf diese Weise wird sichergestellt, dass im Wesentlichen keine brennbaren Gaskomponenten in Kontakt mit dem Oxidationsmittel kommen, so dass selbst bei Verwendung von H₂O₂, dem in der Regel bevorzugten Oxidationsmittel, keine Gefahr besteht, dass sich explosive Gasmischungen bilden könnten. Zudem braucht auch bei Verwendung von H₂O₂ weder ein saurer pH des Absorptionsmittels eingestellt zu werden, was die Geschwindigkeit der Absorption verringern würde, noch die Gegenwart von Metalloberflächen oder Schwermetallionen vermieden zu werden, um die Zersetzung hintanzuhalten.

Die vorliegende Erfindung ist dabei nicht auf die einmalige Durchführung der drei Schritte Absorption, Phasentrennung und Oxidation eingeschränkt, sondern jeder davon kann mehrmals nacheinander durchgeführt werden, mehrere Absorptionsschritte können sich mit mehreren Phasentrennschritten abwechseln, oder es kann eine Anzahl an Absorptionsschritten parallel durchgeführt werden, auf die jeweils eine Phasentrennung folgt. Ausschlaggebend ist - aus den oben genannten Gründen - lediglich, dass jedes in den jeweiligen Absorptionsschritten gebildete Gas-Flüssigkeits-Gemisch zumindest einem Phasentrennschritt unterzogen wird, bevor es der Oxidation zugeführt wird.

Gemäß vorliegender Erfindung ist aus Kosten- und Verfügbarkeitsgründen H₂O₂ das bevorzugte Oxidationsmittel und eine wässrige Lösung eines Alkalimetallhydroxids, wie z.B. NaOH oder KOH, ein bevorzugtes Absorptionsmittel, obwohl weder das Absorptions- noch das Oxidationsmittel speziell eingeschränkt sind. So können als Absorptionsmittel beispielsweise auch Lösungen von Metallcarbonaten, vorzugsweise Alkalimetallcarbonaten, Metalloxiden oder anderen Metallhydroxiden oder auch andere basische Lösungen, wie z.B. wässriges Ammoniumcarbonat oder Alkanolamin, eingesetzt werden. Falls KOH als Absorptionsmittel eingesetzt wird, kann das bei Oxidation des Schwefels zu Sulfat anfallende K₂SO₄ beispielsweise als Düngerbeimischung eingesetzt werden.

Gemäß vorliegender Erfindung wird allerdings bevorzugt, das Sulfid nur zu elementarem Schwefel und nicht zu höheren Oxidationsstufen wie Sulfit oder Sulfat zu oxidieren, da so weitaus geringere Mengen an Oxidationsmittel erforderlich sind. Bei Vergleich der Oxidationsreaktionen zu elementarem Schwefel und zu Sulfat ist im ersteren Fall beispielsweise nur ein Viertel der Menge an Oxidationsmittel notwendig, da der Übergang von S²⁻ zu S⁰ den Übergang zweier Elektronen erfordert, während es zu SO₄²⁻ acht Elektronen sind. Bei Beschränkung auf die rascher ablaufende Oxidation zu elementarem Schwefel können zudem kürzere Verweilzeiten im Oxidationsreaktor eingestellt werden.

In einer bevorzugten Ausführungsform wird als zusätzlicher Schritt iv) ein Teil der im Oxidationsschritt iii) erhaltenen flüssigen Phase wiederverwendet, um darin enthaltene Reste an unverbrauchtem Oxidationsmittel in einem weiteren Oxidationsschritt nutzen zu können.

Allgemein ist das Verfahren der vorliegenden Erfindung mit beliebigen anderen herkömmlichen Verfahrensschritten frei kombinierbar, solange die Wirkungsweise der Erfindung nicht beeinträchtigt wird. Beispielsweise kann der im Phasentrennschritt anfallende Gasstrom in der Folge einem Feinentschwefelungsschritt (z.B. mittels einer mit KMnO₄ imprägnierten Aktivkohleschüttung als Filter oder dergleichen) unterzogen werden, um so einen im Wesentlichen schwefelfreien Biogas-Strom zu erhalten. Alternativ oder zusätzlich dazu kann er auch einem Schritt zur Entfernung von CO₂ unterzogen werden, so z.B. in herkömmlichen Waschkolonnen (Aminwäsche, Druckwasserwäsche, Druckwechseladsorption, physikalische Adsorption, Membranverfahren etc.).

In bevorzugten Ausführungsformen der Erfindung werden weiters im Absorptionsschritt in bekannter Weise Kontaktzeiten zwischen dem zu entschwefelnden Gasgemisch und dem Absorptionsmittel von unter 0,1 s, unter 0,08 s oder unter 0,05 s eingestellt, um bevorzugt H₂S zu absorbieren und die Absorption von CO₂ zu unterdrücken.

In einem zweiten Aspekt stellt die vorliegende Erfindung eine Vorrichtung zur Durchführung des erfindungsgemäßen Verfahrens bereit, genauer gesagt eine Vorrichtung zur Entschwefelung eines H₂S und CO₂ enthaltenden Gasgemischs mittels selektiver Absorption und anschließender Oxidation, die zumindest einen "Absorptionsreaktor" genannten ersten Reaktor für die Chemisorption des zu entschwefelnden Gasgemischs in das Absorptionsmittel und zumindest einen "Oxidationsreaktor" genannten zweiten Reaktor für die Reaktion des mit H₂S angereicherten Absorptionsmittels mit Oxidationsmittel umfasst,wobei:
zur Entschwefelung von brennbare Komponenten, wie z.B. H₂ und/oder CH₄, enthaltenden Gasgemischen
i) zwischen dem zumindest einen Absorptionsreaktor und dem zumindest einen Oxidationsreaktor zumindest ein Separator zur Phasentrennung eines im zumindest einen Absorptionsreaktor gebildeten Gemischs aus flüssiger Phase und Gasphase zwischengeschaltet ist; und
ii) aus dem zumindest einen Separator eine gasdichte Leitung zur Überführung der flüssigen Phase zu dem (den) Oxidationsreaktor(en) ausmündet, die zur Verhinderung einer Rückvermischung der beiden Phasen ein/e/n oder mehrere Siphone, Rückschlagventile oder -klappen oder schwimmergesteuerte oder elektronisch niveaugesteuerte Ableiter umfasst.

Mit einer solchen Vorrichtung gemäß vorliegender Erfindung ist analog zum erfindungsgemäßen Verfahren gewährleistet, dass im Wesentlichen keine brennbaren Gaskomponenten mit Oxidationsmittel oder Zersetzungsprodukten davon in Kontakt kommen, wodurch das Verfahren gemäß dem ersten Aspekt der Erfindung auch unter Verwendung von H₂O₂ als Oxidationsmittel probemlos in der Vorrichtung der Erfindung durchführbar ist.

Die Reaktoren, also sowohl der/die Absorptionsreaktor(en) als auch der/die Oxidationsreaktor(en) sind dabei vorzugsweise aus Rührreaktoren, statischen Mischern und Rohrreaktoren ausgewählt, um im Vergleich zu den Entschwefelungsanlagen nach dem Stand der Technik eine kostengünstige Vorrichtung mit geringem Raumbedarf bereitstellen zu können. Besonders bevorzugt werden derzeit statische Mischer, die zusätzlich zu den obigen Vorteilen gute Durchmischung bei hohem Durchsatz gewährleisten.

Als Separatoren kommen vorzugsweise aus Kontaktabscheidern, z.B. Lamellenabscheidern, und Fliehkraftabscheidern, z.B. Zyklonen, ausgewählte Tröpfchenabscheider zum Einsatz, wiewohl beispielsweise auch Prallflächenabscheider oder Demister aus Drahtgestricken in Frage kommen.

Die gasdichte Leitung zwischen Separator und Oxidationsreaktor kann beispielsweise Rückschlagventile oder -klappen und/oder schwimmergesteuerte oder elektronisch niveaugesteuerte Ableiter (z.B. über Niveauschalter gesteuerte Kondensatpumpen) umfassen, um eine Rückvermischung des entgasten, mit H₂S beladenen Absorptionsmittels mit brennbaren Gaskomponenten zu verhindern. Bei geeigneten Druckniveaus in der Absorptions- und der Oxidationsstufe kann die Leitung zu demselben Zweck auch einfach einen Siphon umfassen, was eine kostengünstige Lösung darstellt.

Zur Beförderung der am Verfahren beteiligten Gas- und Flüssigkeitsströme können manche der erforderlichen Zu- und Ableitungen zu bzw. aus den Reaktoren, deren Anordnung und Wirkungsweise dem durchschnittlichen Fachmann geläufig sind, mit Druck beaufschlagbar sein, Ein- oder Zweistoffdüsen umfassen oder auch einfache Rohreinführungen, gegebenenfalls in Kombination mit Venturidüsen, umfassen. Vorzugsweise kann eine Druckbeaufschlagung direkt mit rezykliertem entschwefeltem Produktgas (z.B. Methan) erfolgen, das im erfindungsgemäßen Verfahren beispielsweise mit einem Druck von 5 bar anfällt.

Für den reibungslosen Betrieb erforderliche Gasverdichter oder Flüssigkeitspumpen sind an entsprechenden Stellen vorzusehen, wie dies dem Fachmann ebenso geläufig ist wie das Vorsehen zusätzlicher Komponenten der Vorrichtung, wie z.B. von Speicherbehältern für die am Verfahren beteiligten Stoffe und Stoffgemische, pH-Sonden zur Messung des pH-Werts der Verfahrensströme, händische oder vorzugsweise elektronische Steuereinrichtungen für Pumpen und/oder Ventile und dergleichen.

Die als Absorptionsmittel eingesetzte wässrige Base, z.B. NaOH, kann weiters in bevorzugten Ausführungsformen unmittelbar vor der Verwendung im erfindungsgemäßen Verfahren zubereitet werden, z.B. durch Auflösen von fester NaOH oder Verdünnen einer konzentrierten NaOH-Lösung in der erforderlichen Menge Wasser. Beispielsweise kann von handelsüblicher 50%iger NaOH ausgegangen werden, die auf die gewünschte Konzentration verdünnt wird.

### KURZBESCHREIBUNG DER ZEICHNUNG

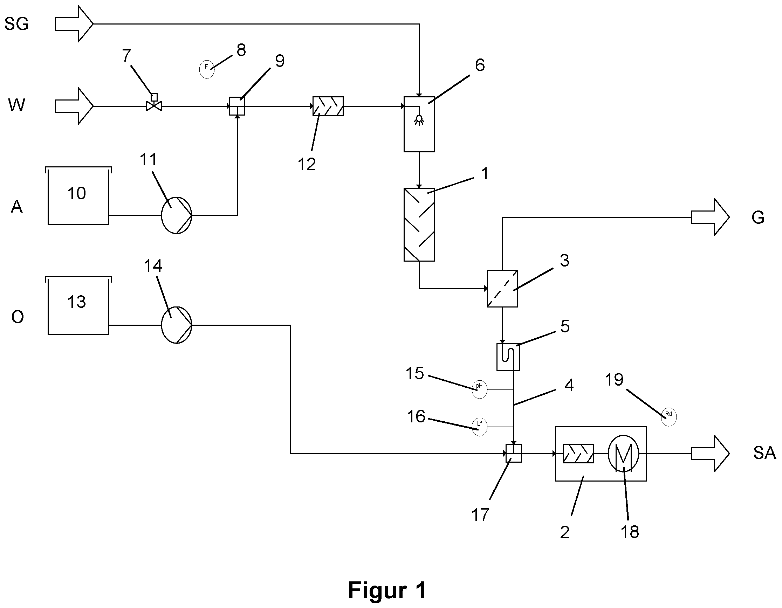

Zu Illustrationszwecken, und nicht als Einschränkung, wird eine bevorzugte Ausführungsform der vorliegenden Erfindung nachstehend unter Bezugnahme auf die beiliegende Zeichnung, Fig. 1, näher beschrieben, die ein Fließbild einer bevorzugten Ausführungsform der Erfindung darstellt.

### DETAILLIERTE BESCHREIBUNG DER ERFINDUNG

In dem Fließbild aus Fig. 1 sind links Quellen bzw. Vorratsbehälter der Edukte angedeutet, d.h. für zumindest ein brennbares Gas enthaltendes schwefelhältiges Gasgemisch SG, Wasser W, Absorptionsmittel A und Oxidationsmittel O.

Als Absorptionsmittel A dient in diesem Beispiel wässrige NaOH, z.B. eine kostengünstig im Handel erhältliche 50%ige Lösung, die aus einem Tank 10 mittels einer Pumpe 11 zum Mischpunkt 9 gefördert wird, wo sie mit Frischwasser W vereinigt wird, das über ein Regelventil (oder eine Pumpe) 7 ebenfalls zum Mischpunkt 9 geleitet wird, der seinerseits eine einfache Rohreinführung, ein T- oder Y-Stück oder dergleichen, aber auch eine Mischeinheit, wie z.B. ein statischer Mischer, sein kann, die zusätzlich oder anstelle des nachfolgenden Mischers 12 vorgesehen sein kann. In der Wasserzuleitung ist ein Durchflussmesser 8 dargestellt, anhand dessen der Wasserstrom regelbar ist.

Alternativ zu der 50%igen Lösung kann auch aus fester NaOH (oder KOH; generell kommen beliebige für diese Zwecke geeignete Basen in Frage) und Wasser eine Lösung mit gewünschter Konzentration zubereitet werden, was aufgrund der aufwändigeren Handhabung (Feststoffdosierung, Wärmetönung) nicht bevorzugt ist.

Vom Mischpunkt 9 gelangt das Gemisch zum Mischer 12, vorzugsweise einem statischen Mischer, wo eine homogene Lösung mit der gewünschten Konzentration (z.B. 10- oder 20%ig) gebildet wird.

Diese wird an 6 mit dem zu entschwefelnden Biogas SG in Kontakt gebracht, wobei es sich vorzugsweise um eine Venturidüse handelt, in der das Gas bei geeigneter Wahl der Strömungsparameter (Druck, Viskosität, Dimensionen usw.) das flüssige Absorptionsmittel sozusagen ansaugt oder mitreißt. Alternativ dazu kann Bauteil 6 aber auch als Sprühkontaktor, z.B. als Ein- oder Zweistoffdüse, ausgeführt sein.

Das Gemisch aus zu entschwefelndem Biogas und Absorptionsmittel wird von dort in zumindest einen ersten Reaktor, den Absorptionsreaktor 1 geleitet. Hierbei handelt es sich, wie oben erwähnt, vorzugsweise um einen Rohrreaktor oder noch bevorzugter um einen statischen Mischer, mit denen hohe Durchsätze, d.h. kurze Verweilzeiten, und gute Durchmischung erzielbar sind. Kurze Verweilzeiten bewirken hier eine bevorzugte Chemisorption von H₂S gegenüber CO₂, was eine verstärkte Anreicherung des Absorptionsmittels mit H₂S - im Vergleich zu CO₂ - bewirkt. Dadurch wird auch die Gesamtmenge an absorbiertem Gas verringert, weswegen weniger Lauge zur Neutralisation des CO₂ erforderlich ist und generell das Volumen der durch die Anlage zu transportierenden Verfahrensströme gesenkt wird, weswegen z.B. die nachgeschalteten Bauteile der Anlage kleiner dimensioniert werden können.

Vom Absorptionsreaktor 1 gelangt das erhaltene Gemisch aus Flüssigkeit und Gas gemäß vorliegender Erfindung in den Separator 3, in dem die Phasen getrennt werden. Dies erfolgt gemäß vorliegender Erfindung vorzugsweise mittels eines Tröpfchenabscheiders, der, wie oben erwähnt, aus Kontaktabscheidern, wie z.B. Lamellenabscheidern, und Fliehkraftabscheidern, z.B. Zyklonen, ausgewählt sein kann. Vorzugsweise handelt es sich um einen Demister aus Drahtgeflecht oder -gestrick oder einen Prallflächenabscheider ("Koaleszenzabscheider").

Das auf diese Weise von der Flüssigkeit abgetrennte, durch Absorption des H₂S in das flüssige Absorptionsmittel entschwefelte, brennbare Gas wird zum Gasauslass G geleitet, während die flüssige Phase, d.h. das an H₂S angereicherte flüssige Absorptionsmittel vorzugsweise einfach ablaufen gelassen und zum Oxidationsreaktor 2 weitergeleitet wird.

Wesentlich ist dabei gemäß vorliegender Erfindung, dass keine Rückvermischung zwischen flüssiger Phase und der Gasphase, die brennbare Komponenten wie etwa Methan enthält, erfolgen kann, damit keine explosiven Gasgemische durch Zutritt von Sauerstoff oder dergleichen entstehen können.

Die Flüssigkeitsableitung 4 aus dem Separator 3 wird aus diesem Grund gegenüber Letzterem wirksam abgedichtet. Die Wahl der Mittel ist nicht speziell eingeschränkt und hängt unter anderem vom beabsichtigten Durchsatz der Anlage und den jeweils gewählten Druckverhältnissen ab. Beispielsweise kommen Rückschlagventile oder -klappen und/oder schwimmergesteuerte oder elektronisch niveaugesteuerte Ableiter in Frage. Bei geeigneten Druckniveaus vor und nach dem Separator, d.h. in der Absorptions- und der Oxidationsstufe der Anlage, kann die Flüssigkeitsableitung auch einfach einen Siphon umfassen, was eine bevorzugte, kostengünstige Lösung darstellt. Ein solcher ist in Fig. 1 als Bezugszeichen 5 eingezeichnet, steht hier aber lediglich stellvertretend für jegliche Mittel zur Abdichtung der Leitung 4 gegenüber dem Seperator 3.

Die Leitung 4 kann weiters Detektoren umfassen, wie dies ebenfalls in Fig. 1 schematisch dargestellt ist, beispielsweise zur pH-Messung (Bezugszeichen 15) oder zur Leitfähigkeitsmessung (Bezugszeichen 16), um die Zusammensetzung der flüssigen Phase, vor allem in Bezug auf den Sulfidgehalt, zu untersuchen und die Verfahrensströme dementsprechend - (semi)automatisch oder händisch - regeln zu können.

An Mischpunkt 17, für den Analoges gilt wie zuvor für Mischpunkt 9, wird das mit Sulfid angereicherte und von brennbarem Gas befreite Absorptionsmittel mit Oxidationsmittel O vermischt, das mittels Pumpe 14 aus einem Vorrat 13 gefördert wird. Anschließend wird das flüssige Gemisch in den Oxidationsreaktor 2 geleitet, wo die Oxidation des Sulfids zu elementarem Schwefel oder höheren Oxidationsstufen desselben, wie z.B. Sulfit oder Sulfat, abgeschlossen wird.

Wie bereits der Absorptionsreaktor 1 ist auch der Oxidationsreaktor 2 vorzugsweise aus Rührreaktoren, statischen Mischern und Rohrreaktoren ausgewählt, was insbesondere bei Verwendung statischer Mischer eine gute Durchmischung bei hohen Durchsätzen sowie Kostengünstigkeit bei geringem Raumbedarf gewährleistet.

Der Oxidationsreaktor 2 kann dabei vorzugsweise einen Wärmetauscher 18 oder andere geeignete Mittel zur Wärmeabfuhr umfassen, oder diese können - je nach der konzentrationsabhängigen Wärmetönung im Reaktor - diesem vor- oder nachgeschaltet sein. Die so abgeführte Wärme kann beispielsweise zum Beheizen anderer Prozesse im Verfahren, z.B. zur Einstellung der Gastemperatur vor der Absorption, genutzt werden.

Als letzter Bauteil vor der Ableitung des schwefel-, sulfit- und/oder sulfathältigen Absorptionsmittels SA, das - je nach Stöchiometrie - auch mehr oder weniger große Mengen an Oxidationsmittel enthält, zeigt Fig. 1 einen bevorzugten Detektor 19 zur Messung des Redoxpotenzials, um die Effizienz des Oxidationsreaktors zu bestimmen und in Abhängigkeit davon die Menge an Oxidationsmittel regeln zu können.

Es versteht sich, dass dieses Fließschema eine relativ einfache, exemplarische Ausführungsform der Erfindung zeigt, die vom durchschnittlichen Fachmann ohne übermäßiges Experimentieren problemlos an die jeweiligen Gegebenheiten und Einsatzzwecke angepasst und optimiert werden kann.

Wie zuvor erwähnt, können insbesondere beide die Reaktoren 1 und 2 in mehrfacher Ausführung vorgesehen werden, wobei jeweils sowohl der parallele als auch der serielle Betrieb mehrerer Reaktoren möglich sind. Nicht nur zu diesen Zwecken können sich weiters sämtliche Verfahrensströme in beliebiger Weise verzweigen, oder es kann ein Verfahrensstrom bzw. ein Teil davon rezykliert werden, z.B. um die Effizienz eines Verfahrensschritts zu steigern, um mit entschwefeltem Gas G Leitungen mit Druck zu beaufschlagen oder (Venturi-)Düsen zu betreiben oder dergleichen.

Weiters können auch weitere Reaktoren für zusätzliche Prozesse, wie z.B. die zuvor im Zusammenhang mit dem ersten Aspekt der Erfindung genannten, mit dem erfindungsgemäßen Verfahren kombinierten Prozesse (Feinentschwefelung, CO₂-Wäsche usw.), samt entsprechenden Speicherbehältern, Leitungen etc. vorgesehen sein.

Wie aus obiger Beschreibung zu erkennen ist, stellt die Erfindung jedenfalls ein wirksames Verfahren und eine zugehörige Vorrichtung bereit, mittels derer brennbare Komponenten enthaltende Gasgemische, insbesondere Biogas aus der Biomassevergärung oder -vergasung, auf wirksame, betriebssichere und ökonomische Weise entschwefelt werden können.

## Patentansprüche

1. Verfahren zur Entschwefelung eines Schwefelwasserstoff (H₂S) und Kohlendioxid (CO₂) enthaltenden Gasgemischs mittels selektiver Absorption des H₂S in ein basisches Absorptionsmittel und anschließender Oxidation des absorbierten H₂S mit einem Oxidationsmittel, wobei
i) als zu entschwefelndes Gasgemisch ein H₂ und/oder CH₄ enthaltendes, brennbares Biogas eingesetzt wird;
ii) nach dem in zumindest einem Absorptionsreaktor (1) durchgeführten Absorptionsschritt ein Phasentrennschritt zur Abtrennung der flüssigen Phase in Form des mit Sulfid angereicherten Absorptionsmittels von der die brennbaren Gaskomponenten enthaltenden Gasphase in zumindest einem Separator (3) durchgeführt wird; und
iii) die so entgaste flüssige Phase aus dem zumindest einen Separator (3) über eine Leitung (4), die zur Verhinderung einer Rückvermischung der beiden Phasen ein/e/n oder mehrere Siphone, Rückschlagventile oder -klappen oder schwimmergesteuerte oder elektronisch niveaugesteuerte Ableiter (5) umfasst, in zumindest einen Oxidationsreaktor (2) übergeführt wird, wo sie mit einem Oxidationsmittel in Kontakt gebracht wird, um das Sulfid zu elementarem Schwefel und/oder höheren Oxidationsstufen des Schwefels zu oxidieren.

2. Verfahren nach Anspruch 1, **dadurch gekennzeichnet, dass** das Oxidationsmittel Wasserstoffperoxid (H₂O₂) umfasst.

3. Verfahren nach Anspruch 1 oder 2, **dadurch gekennzeichnet, dass** als Absorptionsmittel eine wässrige Lösung eines Alkalimetallhydroxids eingesetzt wird.

4. Verfahren nach einem der Ansprüche 1 bis 3, **dadurch gekennzeichnet, dass** das Sulfid zu elementarem Schwefel oxidiert wird.

5. Verfahren nach einem der vorangegangenen Ansprüche, **dadurch gekennzeichnet, dass** als zusätzlicher Schritt iv) ein Teil der im Oxidationsschritt iii) erhaltenen flüssigen Phase als Oxidationsmittel wiederverwendet wird.

6. Verfahren nach einem der vorangegangenen Ansprüche, **dadurch gekennzeichnet, dass** im Absorptionsschritt Kontaktzeiten zwischen dem zu entschwefelnden Gasgemisch und dem Absorptionsmittel von unter 0,1 s, unter 0,08 s oder unter 0,05 s eingestellt werden.

7. Vorrichtung zur Entschwefelung eines H₂S und CO₂ enthaltenden Gasgemischs mittels selektiver Absorption und anschließender Oxidation, umfassend zumindest einen Absorptionsreaktor (1) für die Chemisorption des zu entschwefelnden Gasgemischs in das Absorptionsmittel und zumindest einen Oxidationsreaktor (2) für die Reaktion des so mit H₂S angereicherten Absorptionsmittels mit Oxidationsmittel, wobei zur Entschwefelung von brennbare Komponenten, wie z.B. H₂ und/oder CH₄, enthaltenden Gasgemischen
i) zwischen dem zumindest einen Absorptionsreaktor (1) und dem zumindest einen Oxidationsreaktor (2) zumindest ein Separator (3) zur Phasentrennung eines im zumindest einen Absorptionsreaktor (1) gebildeten Gemischs aus flüssiger Phase und Gasphase zwischengeschaltet ist; und
ii) aus dem zumindest einen Separator (3) eine gasdichte Leitung (4) zur Überführung der flüssigen Phase zu dem (den) Oxidationsreaktor(en) (2) ausmündet, die zur Verhinderung einer Rückvermischung der beiden Phasen ein/e/n oder mehrere Siphone, Rückschlagventile oder -klappen oder schwimmergesteuerte oder elektronisch niveaugesteuerte Ableiter (5) umfasst.

8. Vorrichtung nach Anspruch 6, **dadurch gekennzeichnet, dass** die Reaktoren (1, 2) aus Rührreaktoren, Rohrreaktoren und insbesondere aus statischen Mischern ausgewählt sind.

9. Vorrichtung nach Anspruch 7 oder 8, **dadurch gekennzeichnet, dass** der Separator (3) ein aus Kontaktabscheidern und Fliehkraftabscheidern ausgewählter Tröpfchenabscheider ist.

10. Vorrichtung nach einem der Ansprüche 7 bis 9, **dadurch gekennzeichnet, dass** die gasdichte Leitung (4) eine niveaugesteuerte Pumpe und/oder einen schwimmergesteuerten Ableiter (5) umfasst.

11. Vorrichtung nach einem der Ansprüche 7 bis 10, **dadurch gekennzeichnet, dass** manche der Zu- und Ableitungen zu bzw. aus den Reaktoren (1, 2) mit Druck beaufschlagbar sind und/oder eine oder mehrere Düsen (6) umfassen.

## Claims

1. A method for desulfurizing a gaseous mixture containing hydrogen sulfide (H₂S) and carbon dioxide (CO₂) by selective absorption of the H₂S into a basic absorbing agent and subsequent oxidation of the absorbed H₂S with an oxidizing agent, wherein
i) an inflammable biogas containing H₂ and/or CH₄ is used as said gaseous mixture to be desulfurized;
ii) after said absorption step conducted in at least one absorption reactor (1), a phase separation step for separating the liquid phase in the form of the sulfide-enriched absorbing agent from the gaseous phase containing the inflammable gaseous components is conducted in at least one separator (3); and
iii) the thus degassed liquid phase is transferred via a conduit (4), which contains one or more drain traps, check valves or swing-type check valves, or floater-controlled or electronically level-controlled dischargers (5) to prevent backmixing of the two phases, to at least one oxidation reactor (2), where it is contacted with an oxidizing agent in order to oxidize the sulfide to elemental sulfur and/or higher oxidation states of sulfur.

2. The method of claim 1, **characterized in that** the oxidizing agent comprises hydrogen peroxide (H₂O₂).

3. The method of claim 1 or 2, **characterized in that** an aqueous solution of an alkali metal hydroxide is used as said absorbing agent.

4. The method of any one of the claims 1 to 3, **characterized in that** the sulfide is oxidized to elemental sulfur.

5. The method according to any one of the preceding claims, **characterized in that**, as an additional step iv), part of the liquid phase obtained in the oxidizing step iii) is reused as said oxidizing agent.

6. The method according to any one of the preceding claims, **characterized in that**, in the absorption step, contact times of less than 0.1 s, less than 0.8 s, or less than 0.05 s, between said gaseous mixture to be desulfurized and said absorbing agent are adjusted.

7. A device for desulfurizing a gaseous mixture containing hydrogen sulfide (H₂S) and carbon dioxide (CO₂) by selective absorption and subsequent oxidation, comprising at least one absorption reactor (1) for the chemisorption of the gaseous mixture to be desulfurized into the absorbing agent and at least one oxidation reactor (2) for reacting the thus H₂S-enriched absorbing agent with an oxidizing agent,
wherein, for desulfurizing gaseous mixtures containing inflammable components such as H₂ and/or CH₃,
i) at least one separator (3) for the phase separation of a mixture consisting of a liquid phase and a gaseous phase, formed in the at least one absorption reactor (1), is arranged between the at least one absorption reactor (1) and the at least one oxidation reactor (2); and
ii) a gas-tight conduit (4) for transferring the liquid phase to the oxidation reactor(s) (2) exits from the at least one separator (3) and comprises one or more drain traps, check valves or swing-type check valves, or floater-controlled or electronically level-controlled dischargers (5) to prevent backmixing of the two phases.

8. The device of claim 6, **characterized in that** the reactors (1, 2) are selected from stirred reactors, tubular reactors, and in particular static mixers.

9. The device of claim 7 or 8, **characterized in that** the separator (3) is a droplet separator selected from contact separators and centrifugal separators.

10. The device of any one of the claims 7 to 9, **characterized in that** the gas-tight conduit (4) comprises a level-controlled pump and/or a floater-controlled discharger (5).

11. The device according to any one of the claims 7 to 10, **characterized in that** some of the feed lines and discharge lines to or from the reactors (1, 2) are pressurizable and/or comprise one or more nozzles (6).

## Revendications

1. Procédé de désulfuration d'un mélange de gaz qui contient de l'hydrogène sulfuré (H₂S) et du dioxyde de carbone (CO₂) par absorption sélective de l'H₂S dans un absorbant basique et oxydation ultérieure du H₂S absorbé avec un oxydant,
i) un biogaz inflammable qui contient de l'H₂ et/ou du CH₄ étant utilisé comme ledit mélange de gaz à désulfurer;
ii) une étape de séparation de phases pour séparer la phase liquide sous forme de l'absorbant inflammable enrichi en sulfure de la phase gazeuse contenant les composants de gaz inflammables étant effectuée dans au moins un séparateur (3) après une étape d'absorption effectuée dans au moins un réacteur d'absorption (1); et
iii) la phase liquide ainsi dégazée étant transférée dudit séparateur (3) par l'intermédiaire d'un conduit (4), qui contient un ou plusieurs siphons, clapets ou soupapes anti-retour ou déflecteurs (5) commandés par flotteur ou de manière électronique et déterminée par le niveau pour empêcher les deux phases d'être mélangées de nouveau, à au moins un réacteur à oxydation (2) où elle est contactée avec un oxydant pour l'oxyder pour obtenir du soufre élémentaire et/ou des nombres d'oxydation supérieurs du soufre.

2. Procédé selon la revendication 1, **caractérisé en ce que** l'oxydant comprend du peroxyde d'hydrogène (H₂O₂).

3. Procédé selon la revendication 1 ou 2, **caractérisé en ce qu'**une solution aqueuse d'un hydroxyde de métal alcalin est utilisée comme absorbant.

4. Procédé selon l'une quelconque des revendications 1 à 3, **caractérisé en ce que** le sulfure est oxydé pour obtenir du soufre élémentaire.

5. Procédé selon l'une quelconque des revendications précédentes, **caractérisé en ce qu'**une partie de la phase liquide de l'étape d'oxydation iii) est réutilisée comme agent oxydant dans une étape supplémentaire iv).

6. Procédé selon l'une quelconque des revendications précédentes, **caractérisé en ce que** des temps de contact entre le mélange de gaz à désulfurer et l'absorbant dans l'étape d'absorption sont définis pour être inférieurs à 0,1 s, inférieurs à 0,8 s ou inférieurs à 0,05 s.

7. Dispositif de désulfuration d'un mélange de gaz qui contient de l'H₂S et du CO₂ par absorption sélective et oxydation ultérieure, ledit dispositif comprenant au moins un réacteur d'absorption (1) pour la chimisorption du mélange de gaz à désulfurer dans l'absorbant et au moins un réacteur d'oxydation (2) pour faire réagir l'absorbant ainsi enrichi en H₂S avec un oxydant,
pour la désulfuration de mélanges de gaz contenant des composants inflammables, tels que H₂ et/ou CH₃,
i) au moins un séparateur (3) pour la séparation des phases d'un mélange constitué d'une phase liquide et d'une phase gazeuse formée dans ledit au moins un réacteur d'absorption (1) étant disposé entre ledit au moins un réacteur d'absorption (1) et ledit au moins un réacteur d'oxydation (2); et
ii) un conduit étanche au gaz (3) pour transférer la phase liquide dans le ou les réacteurs d'oxydation (2) sortant du ou des séparateurs (3), comprenant un ou plusieurs siphons, clapets ou soupapes anti-retour ou déflecteurs (5) commandés par flotteur ou de manière électronique par rapport au niveau pour empêcher les deux phases d'être mélangées de nouveau.

8. Dispositif selon la revendication 6, **caractérisé en ce que** les réacteurs (1, 2) sont choisis parmi les réacteurs agités, les réacteurs tubulaires, et en particulier les mélangeurs statiques.

9. Dispositif selon la revendication 7 ou 8, **caractérisé en ce que** le séparateur (3) est un dévésiculeur choisi parmi les séparateurs contacteurs et les cyclones.

10. Dispositif de l'une quelconque des revendications 7 à 9, **caractérisé en ce que** le conduit étanche au gaz (4) comprend une pompe commandée par rapport au niveau et/ou un déflecteur (5) commandé par flotteur.

11. Dispositif selon l'une quelconque des revendications 7 à 10, **caractérisé en ce que** certaines des conduites d'alimentation vers et d'évacuation des réacteurs (1, 2) peuvent être pressurisées et/ou comportent une ou plusieurs tuyères (6).
